# EUROPÄISCHE PATENTSCHRIFT

(11) **EP 1 212 521 B1**
(45) Veröffentlichungstag und Bekanntmachung des Hinweises auf die Patenterteilung: **21.05.2003**
(21) Anmeldenummer: 00964101.0
(22) Anmeldetag: 01.09.2000
(51) Int. Cl.: F01N 3/20, F01N 3/027, F01N 3/28

(54) **VORRICHTUNG MIT HEIZELEMENT ZUR ABGASREINIGUNG**
DEVICE WITH A HEATING ELEMENT, FOR CLEANING EXHAUST GASES
DISPOSITIF DOTE D'UN ELEMENT CHAUFFANT ET DESTINE A L'EPURATION DES GAZ D'ECHAPPEMENT

(30) Priorität: 13.09.1999 DE 19943846
(43) Veröffentlichungstag der Anmeldung: 12.06.2002
(73) Patentinhaber: Emitec Gesellschaft für Emissionstechnologie mbH, 53797 Lohmar (DE)
(72) Erfinder: BRÜCK, Rolf, 51429 Bergisch Gladbach (DE); KAISER, Friedrich-Wilhelm, 53819 Neunkirchen-Seelscheid (DE); KOTTHOFF, Hubertus, 53809 Ruppichteroth (DE)
(74) Vertreter: Kahlhöfer, Hermann, Dipl.-Phys.
(86) Internationale Anmeldenummer: EP0008597
(87) Internationale Veröffentlichungsnummer: WO01020142

(56) Entgegenhaltungen:
- EP-B- 0 557 309
- EP-B- 0 783 621
- FR-A- 2 771 449
- US-A- 5 254 840

## Beschreibung

Die vorliegende Erfindung betrifft eine Vorrichtung zum Reinigen von Abgasen einer Verbrennungskraftmaschine, insbesondere eines Dieselmotors, mit mindestens einem eine wabenförmige Struktur aufweisenden und von Abgas durchströmbaren Katalysator-Trägerkörper, welcher in einem Mantelrohr angeordnet ist, mit einem elektrischen Heizelement, wobei das Heizelement an seinen Enden jeweils einen Stromanschluß aufweist und durch einen elektrisch isolierenden Spalt in dem Heizelement ein gewundener Strompfad festgelegt ist.

Eine solche Vorrichtung ist beispielsweise aus der EP 0 783 621 bekannt. Sehr weitgehende Angaben enthält auch die Broschüre "Elektrisch Heizbarer Katalysator Emicat" der Anmelderin, welche sich ausführlich mit der Historie der Entwicklung beheizbarer Wabenkörper und deren Aufbau beschäftigt.

Bei den bekannten Anordnungen geht man im wesentlichen davon aus, daß der beheizbare Wabenkörper in Strömungsrichtung vor einem Katalysator-Trägerkörper angeordnet ist, damit er diesen bei Bedarf schnell aufheizen kann. Dabei gehen die bekannten Anordnungen davon aus, daß eine möglichst homogene Beheizung der Querschnittsfläche stattfinden soll, so daß der elektrisch isolierende Spalt klein gehalten wird und der weitaus größte Teil der Querschnittsfläche beheizt wird.

Aus der EP 0 557 309 B 1 ist es allerdings auch schon bekannt, einen beheizbaren Wabenkörper hinter einem Katalysator-Trägerkörper anzuordnen. Dabei geht dieses Konzept davon aus, daß die erste Scheibe einer Katalysatoranordnung im Laufe der Lebensdauer durch hohe Temperaturen und andere Prozesse altert, daß heißt in ihrer katalytischen Aktivität beeinträchtigt wird, weshalb erst ein weiter hinten liegender Bereich beheizt wird. Auch eine sogenannte Vergiftung der ersten Scheibe der Katalysatoranordnung durch bestimmte Anteile im Kraftstoff soll auf diese Weise ausgeglichen werden.

Weiterhin bekannt sind Konzepte, bei denen ein im Prinzip gleichmäßig mit elektrisch beheizbaren Blechlagen oder metallischen Strukturen ausgefüllter Querschnitt durch besondere Maßnahmen ungleichmäßig aufgeheizt wird, insbesondere unter Erzeugung bestimmter heißer Bereiche (hot spots). Solche Konzepte erfordern eine relativ komplizierte Herstellungstechnik, um Strukturen zu schaffen, die an bestimmten Stellen einen hohen elektrischen Widerstand und an anderen Stellen einen kleineren elektrischen Widerstand haben.

Bei elektrisch beheizbaren Wabenkörpem in Abgasanlagen von Verbrennungskraftmaschinen, die andere Komponenten aufheizen sollen, kommt es nicht nur darauf an, einen Wabenkörper homogen oder inhomogen auf bestimmte Temperaturen aufzuheizen, sondern vor allem darauf, die Heizleistung auch an eine nachfolgende Komponente und/oder das hindurchströmende Abgas abzugeben.

Ein einfacher Heizdraht beispielsweise könnte aufgrund seiner kleinen Oberfläche nicht genügend Wärme abgeben. Zur Aufheizung eines nachfolgenden Wabenkörpers auf eine bestimmte Mindesttemperatur, beispielsweise zum Abbrennen von angesammeltem Ruß oder zum Zünden einer katalytischen Reaktion, muß daher ein beheizbarer Wabenkörper nicht nur selbst die nötige Temperatur erreichen, sondern diese auch an das Abgas oder einen nachfolgenden Wabenkörper abgeben können.

Dokument US 5 254 840 A offenbart eine Vorrichtung mit einem eine wabenförmige Struktur aufweisenden und von Abgas durchströmbaren Katalysator-Trägerkörper, welcher in einem Mantelrohr angeordnet ist, mit einem elektrischen Heizelement, wobei das Heizelement an seinen Enden jeweils einen Stromanschluß aufweist und durch einen elektrisch isolierenden Spalt in dem Heizelement ein gewundener Strompfad festgelegt ist. Das Heizelement ist ein Wabenkörper, der mit elektrisch isolierenden Stützelementen an dem Katalysator-Trägerkörper befestigt ist und der in Strömungsrichtung des Abgases hinter dem Katalysator-Trägerkörper angeordnet ist.

Aufgabe der vorliegenden Erfindung ist es, eine Vorrichtung zum Reinigen von Abgasen einer Verbrennungskraftmaschine zu schaffen mit einem Heizelement, welches eine schnelle und effektive Aufheizung eines nachfolgenden Elementes, insbesondere eines Rußfilters, ermöglicht. Dabei soll die Anordnung mechanisch stabil sein und mit einer für Kraftfahrzeuge geeigneten Stromstärke betrieben werden können.

Zur Lösung dieser Aufgabe dient eine Vorrichtung mit den Merkmalen des Anspruchs 1. Vorteilhafte Ausgestaltungen werden in den abhängigen Ansprüchen beschrieben.

Gemäß der Erfindung weist die Vorrichtung zum Reinigen von Abgasen einen Katalysator-Trägerkörper mit einer wabenförmigen Struktur auf, an dem ein Wabenkörper als Heizelement mittels elektrisch isolierender Stützelemente befestigt ist. Der Wabenkörper hat an seinen Enden jeweils einen Stromanschluß und ist so geformt, daß er einen gewundenen Strompfad festlegt. Dabei ist er in Strömungsrichtung des Abgases hinter dem Katalysator-Trägerkörper angeordnet. Der Wabenkörper hat eine große Oberfläche, wodurch eine gute Wärmeübertragung auf das hindurch strömende Abgas gewährleistet ist. Die erzeugte Wärme kann dadurch und durch Strahlung schnell auf das Abgas bzw. eine nachfolgende Komponente übertragen werden. Eventuell durch Strahlung an den in Abgasrichtung vorab angeordneten Katalysator-Trägerkörper abgegebene Heizleistung wird von diesem wiederum an das Abgas abgegeben, so daß die volle Heizleistung für die nachgeschaltete Komponente zur Verfügung steht.

Der Wabenkörper weist eine erste Querschnittsfläche und der Spalt eine zweite Querschnittsfläche auf, wobei das Verhältnis von erster zu zweiter Querschnittsfläche kleiner als 2 ist.

Bevorzugt ist der Wabenkörper so gestaltet, daß der Strompfad eine etwa mäander- oder spiralförmige Form aufweist.

Bei einer besonders bevorzugten Ausführungsform ist der Spalt sehr viel größer als bei den bekannten Anordnungen, wie sie insbesondere in dem oben zitierten Prospekt "Elektrisch Heizbarer Katalysator Emicat" beschrieben sind. Zwar entspricht der prinzipielle Aufbau bei der erfindungsgemäßen Vorrichtung dem dort gezeigten "Heizkatalysator Serie 6", jedoch ist erstens die Anordnung in bezug auf die Strömungsrichtung umgekehrt und zweitens der elektrisch isolierende Spalt sehr viel größer als bei bekannten Ausführungsformen. Besonders bevorzugt ist eine Ausführungsform, bei der das Verhältnis der Querschnittsfläche des beheizbaren Wabenkörpers zur Querschnittsfläche des Spaltes kleiner als 1 ist. Letzteres bedeutet, daß die Breite des Spaltes größer als die Breite des beheizbaren Wabenkörpers, welcher den gewundenen Strompfad bildet, ist.

Dennoch lassen sich die elektrischen Eigenschaften des Heizelementes immer noch beliebig einstellen. Geht man von einer konstanten typischen Ausdehnung des Heizelementes in Strömungsrichtung von 5 bis 20 mm aus, insbesondere 10 mm, so bedeutet eine Vergrößerung der Spaltbreite, daß die Länge des Strompfades in dem Heizelement verkürzt werden muß und/oder daß die Zahl der parallelen Blechlagen in dem Strompfad reduziert werden muß und/oder daß die Größe der Zellen in dem Strompfad verkleinert werden muß. Gerade die letzte der genannten Möglichkeiten erlaubt es, bei gleicher Heizleistung (der elektrische Widerstand verändert durch eine Verkleinerung der Zellen, aber unter Beibehaltung aller übrigen Parameter nicht wesentlich), mehr Heizleistung in Teilströme des Abgases zu bringen, die durch das Heizelement (und nicht durch den Spalt) hindurchgehen. So entstehende heiße Strähnen können eine nachfolgende Komponente partiell aufheizen, was für das Anspringen einer katalytischen Reaktion oder besonders für die Entzündung von in einem Rußfilter angesammeltem Ruß besonders günstig ist.

Der Spalt in dem beheizbaren Wabenkörper kann entweder über seinen Verlauf eine annähernd gleiche Breite aufweisen, wodurch in allen Querschnittsbereichen heiße Teilströme erzeugt werden oder der Spalt kann eine in Richtung zum Mantelrohr hin zunehmende Breite aufweisen. Letzteres ist an die typische Strömungsverteilung in einem Abgassystem angepaßt, so daß mehr Heizleistung im Inneren des Systems als in den äußeren Bereichen aufgebracht werden kann.

Zur Vermeidung von Schwingungen des erfindungsgemäß bevorzugt sehr schmalen Strompfades ist es besonders bevorzugt, die Stützelemente zwischen Heizelement und Katalysator-Trägerkörper in etwa gleichen Abständen über den Strompfad zu verteilen.

Der als Abstützung für das Heizelement dienende Katalysator-Trägerkörper trägt typischerweise eine katalytisch aktive Beschichtung, die die Oxidation von Bestandteilen im Abgas fördert, insbesondere von Kohlenmonoxid und Kohlenwasserstoffen. Auch der beheizbare Wabenkörper kann bevorzugt mit einer solchen katalytisch aktiven Schicht, insbesondere mit einer oxidierend wirkenden Schicht, ausgestattet werden.

Besonders bevorzugt weist der beheizbare Wabenkörper kleinere Waben als die Waben des Katalysator-Trägerkörpers auf. Insbesondere wird für den Katalysator-Trägerkörper eine Zellenzahl von 200 bis 500 cpsi (cells per square inch) und für den beheizbaren Wabenkörper eine Zellenzahl von 400 bis 800 cpsi bevorzugt. Der beheizbare Wabenkörper ist dabei insbesondere aus abwechselnden Lagen schwach und stark gewellter Bleche aufgebaut.

Besonders geeignet ist die erfindungsgemäße Vorrichtung in Kombination mit einem nachgeschalteten Rußfilter, welcher insbesondere auch ein keramischer Filter sein kann. An einem keramischen Filter läßt sich ein Heizkörper der beschriebenen Art nicht problemlos abstützen, da die Ausdehnungskoeffizienten von Metall und Keramik zu unterschiedlich sind. Die beschriebene Konstruktion eines hinter einem Oxidationskatalysator abgestützten Heizelementes eignet sich daher besonders für eine solche Gesamtanordnung.

In der Zeichnung ist ein Ausführungsbeispiel der Erfindung dargestellt, welches im folgenden detailliert beschrieben wird. In der Zeichnung zeigt:
Fig. 1 eine vereinfachte Darstellung einer Katalysatorvorrichtung mit einem s-förmig gewundenen Wabenkörper im Schnitt und
Fig.2 eine schematische Darstellung eines Abgassystems mit einer erfindungsgemäßen Vorrichtung.

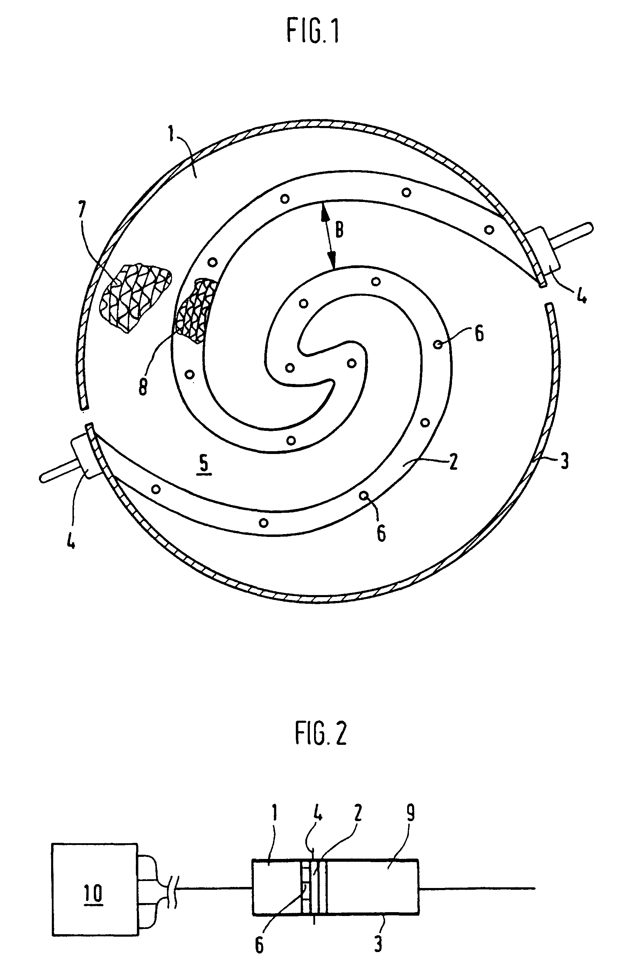

Bei dem in Fig. 1 gezeigten Ausführungsbeispiel der Erfindung sind ein Katalysator-Trägerkörper 1 und ein Wabenkörper 2 in einem Mantelrohr 3 angeordnet. Der Wabenkörper 2 dient als elektrisches Heizelement mit jeweils einem Stromanschluß 4 an seinen Enden und legt durch einen isolierenden Spalt 5 einen gewundenen Strompfad fest. Der Wabenkörper 2 ist über elektrisch isolierende Stützelemente 6 an dem Katalysator-Trägerkörper 1 befestigt. Der Wabenkörper 2 ist in Strömungsrichtung des Abgases hinter dem Katalysator-Trägerkörper 1 angeordnet, wie aus Fig. 2 ersichtlich wird. Die Stützelemente 6 sind in etwa gleichen Abständen über den Strompfad des Wabenkörpers 3 verteilt angeordnet. In dem in Fig. 1 gezeigten Ausführungsbeispiel sind als Stützelemente 6 Metallstifte mit einer in der Figur nicht dargestellten elektrischen Isolierung vorgesehen. Die Stützelemente 6 verhindern Schwingungen und elektrische Kurzschlüsse. Das aus dem Katalysator-Trägerkörper 1 ausströmende Abgas strömt zum Teil an dem Wabenkörper 2 vorbei und strömt zu einem anderen Teil durch den Wabenkörper 2 hindurch. Dieser Teil wird durch die große Oberfläche des Heizelementes 2 aufgeheizt und kann dadurch eine nachfolgende Komponente ebenfalls in Teilbereichen aufheizen.

Fig. 2 zeigt die prinzipielle Anordnung der erfindungsgemäßen Vorrichtung in einem Abgassystem einer Verbrennungskraftmaschine 10. Abgas aus der Verbrennungskraftmaschine 10 durchströmt zunächst den Katalysator-Trägerkörper 1, dann den Wabenkörper 2 und dann eine nachfolgende Komponente 9, insbesondere ein Rußfilter. Anders als hier dargestellt kann die nachfolgende Komponente auch einen größeren Durchmesser als der beheizbare Wabenkörper haben.

Die vorliegende Erfindung eignet sich besonders für die Abgasreinigung von Dieselmotoren, bei denen zunächst oxidierbare gasförmigen Komponenten umgesetzt und danach Partikel mit einem Partikelfilter herausgefiltert werden. Das Abbrennen von gesammeltem Ruß muß, wenn die Betriebstemperatur des Rußfilters über längere Zeiträume nicht die zum Abbrennen nötige Temperatur erreicht, durch zusätzliche Beheizung gezündet werden, wofür sich die erfindungsgemäße Vorrichtung besonders eignet. Eine völlig homogene Beheizung ist nicht erforderlich, da der gezündete Ruß in Teilbereichen auch angrenzende Bereiche zünden kann. Es ist daher günstiger, heiße Teilströme mit effektivem Einsatz an elektrischer Energie zu erzeugen als homogen den ganzen Strömungsquerschnitt zu beheizen.

### Bezugszeichenliste

- 1: Katalysator-Trägerkörper
- 2: beheizbarer Wabenkörper
- 3: Mantelrohr
- 4: Stromanschluß
- 5: elektrisch isolierender Spalt
- 6: Stützelement
- 7: Waben den Katalysator-Trägerkörpers
- 8: Waben des beheizbaren Wabenkörpers
- 9: weiterer Wabenkörper (Rußfilter)
- 10: Verbrennungskraftmaschine

- B: Breite des Spaltes 5

## Patentansprüche

1. Vorrichtung zum Reinigen von Abgasen einer Verbrennungskraftmaschine (10), insbesondere eines Dieselmotors, mit mindestens einem eine wabenfönnige Struktur aufweisenden und von Abgas durchströmbaren Katalysator-Trägerkörper (1), welcher in einem Mantelrohr (3) angeordnet ist, mit einem elektrischen Heizelement, wobei das Heizelement an seinen Enden jeweils einen Stromanschluß (4) aufweist und durch einen elektrisch isolierenden Spalt (5) in dem Heizelement ein gewundener Strompfad festgelegt ist, wobei das Heizelement ein Wabenkörper (2) ist, der Wabenkörper (2) mit elektrisch isolierendenen Stützelementen (6) an dem Katalysator-Trägerkörper (1) befestigt ist und der Wabenkörper (2) in Strömungsrichtung des Abgases hinter dem Katalysator-Trägerkörper (1) angeordnet ist, wobei der WabenKörper (2) eine erste Querschnittsfläche und der spalt (5) eine zweite Querschnittsfläche hat, **dadurch gekennzeichnet, daß** das Verhältnis von erster zu zweiter Querschnitlsfläche kleiner als 2 ist.

2. Vorrichtung nach Anspruch 1, **dadurch gekennzeichnet, daß** der Wabenkörper (2) so gestaltet ist, daß der Strompfad eine etwa mäander- oder spiral-förmige Form aufweist.

3. Vorrichtung nach Anspruch 1, **dadurch gekennzeichnet, daß** das Verhältnis von erster zu zweiter Querschnitsfläche kleiner als 1 ist.

4. Vorrichtung nach einem der vorherigen Ansprüche, **dadurch gekennzeichnet, daß** der Spalt (5) über seinen gesamten Verlauf eine annähernd gleichbleibende Breite (B) aufweist.

5. Vorrichtung nach einem der Ansprüche 1 bis 4, **dadurch gekennzeichnet, daß** der Spalt (5) in Richtung zum Mantelrohr (3) eine zunehmende Breite (B) aufweist.

6. Vorrichtung nach einem der vorherigen Ansprüche, **dadurch gekennzeichnet, daß** die Stützelemente (6) in etwa gleichen Abständen über den Strompfad verteilt sind.

7. Vorrichtung nach einem der vorherigen Ansprüche, **dadurch gekennzeichnet, daß** der Wabenkörper (2) mit einer katalytisch aktiven Schicht versehen ist.

8. Vorrichtung nach einem der vorherigen Ansprüche, **dadurch gekennzeichnet, daß** der Wabenkörpers (2) kleinere Waben (8) aufweist als die Waben (7) des Katalysator-Trägerkörpers (1).

9. Vorrichtung nach einem der Ansprüche 1 bis 7, **dadurch gekennzeichnet, daß** der Wabenkörpers (2) gleich große Waben (8) aufweist wie der Katalysator-Trägerkörper (1).

10. Vorrichtung nach einem der vorherigen Ansprüche, **dadurch gekennzeichnet, daß** in Strömungsrichtung des Abgases hinter dem Wabenkörper (2) ein weiterer Wabenkörper (9), insbesondere ein Rußfilter, vorhanden ist.

## Claims

1. A device for the purification of exhaust gas of an internal combustion engine (10), in particular a diesel engine, with at least one catalyst support body (1) which has a honeycomb structure, can be flowed through by exhausted gas and is arranged in a casing tube (3), with an electrical heating element, the heating element having a power connection (4) at each of its ends and a twisting current path being established in the heating element by an electrically insulating gap (5), wherein the heating element is a honeycomb body (2), said honeycomb body (2) is fastened to the catalyst support body (1) by electrically insulating supporting elements (6) and the honeycomb body (2) is arranged downstream of the catalyst support body (1) in the direction of flow of the exhaust gas, wherein the honeycomb body (2) has a first cross-sectional area and the gap (5) has a second cross-sectional area, **characterized in that** the ratio of the first to the second cross-sectional area is smaller than two.

2. The device as claimed in claim 1, **characterized in that** the honeycomb body (2) is shaped in such a way that the current path has an approximately meandering or spiralling form.

3. The device as claimed in claim 1, **characterized in that** the ratio of the first to the second cross-sectional area is smaller than one.

4. The device as claimed in one of the preceding claims, **characterized in that** the gap (5) has a width (B), which remains approximately the same over its entire extent.

5. The device as claimed in one of claims 1 to 4, **characterized in that** the gap (5) has a width (B) which increases in the direction of the casing tube (3).

6. The device as claimed in one of the preceding claims, **characterized in that** the supporting elements (6) are distributed at approximately equal intervals over the current path.

7. The device as claimed in one of the preceding claims, **characterized in that** the honeycomb body (2) is provided with a catalytically active layer.

8. The device as claimed in one of the preceding claims, **characterized in that** the honeycomb body (2) has smaller honeycombs than the honeycombs (7) of the catalyst support body (1).

9. The device as claimed in one of claims 1 to 7, **characterized in that** the honeycomb body (2) has honeycombs (8) of the same size as the catalyst support body (1).

10. The device as claimed in one of the preceding claims, **characterized in that** a further honeycomb body (9), in particular a particulate filter, is present downstream of the honeycomb body (2) in the direction of flow of the exhaust gas.

## Revendications

1. Dispositif destiné à l'épuration de gaz d'échappement d'une machine à combustion interne (10), notamment d'un moteur diesel, avec au moins un corps support de catalyseur (1) qui présente une structure en forme de nids d'abeilles, peut être parcouru par du gaz d'échappement et qui est agencé dans un tube d'enveloppe (3), avec un élément chauffant électrique, l'élément chauffant ayant une alimentation électrique (4) à chacune de ses extrémités et un circuit de courant vrillé étant défini dans l'élément chauffant par un entrefer (5) électriquement isolant, dans quel cas l'élément chauffant est un corps en nids d'abeilles (2), le corps en nids d'abeilles (2) est fixé au corps support de catalyseur (1) à l'aide d'éléments de support (6) électriquement isolants et le corps en nids d'abeilles (2) est agencé en aval du corps support de catalyseur (1) dans le sens de l'écoulement du gaz d'échappement, dans quel cas le corps en nids d'abeilles (2) a une première aire de section transversale et l'entrefer (5) une deuxième aire de section transversale, **caractérisé en ce que** le rapport entre la première et la deuxième aire de section transversale est plus petit que 2.

2. Dispositif selon la revendication 1, **caractérisé en ce que** le corps en nids d'abeilles (2) est formé de telle manière que le circuit de courant a environ une forme de méandre ou de spirale.

3. Dispositif selon la revendication 1, **caractérisé en ce que** le rapport entre la première et la deuxième aire de section transversale est plus petit que 1.

4. Dispositif selon l'une des revendications précédentes, **caractérisé en ce que** l'entrefer (5) a une largeur (B) qui reste approximativement uniforme sur toute son étendue.

5. Dispositif selon l'une des revendications 1 à 4, **caractérisé en ce que** l'entrefer (5) a une largeur (B) qui augmente en direction du tube d'enveloppe (3).

6. Dispositif selon l'une des revendications précédentes, **caractérisé en ce que** les éléments de support (6) sont répartis à écarts approximativement égaux sur le circuit de courant.

7. Dispositif selon l'une des revendications précédentes, **caractérisé en ce que** le corps en nids d'abeilles (2) est doté d'une couche à activité catalytique.

8. Dispositif selon l'une des revendications précédentes, **caractérisé en ce que** le corps en nids d'abeilles (2) présente des nids d'abeilles (8) plus petits que les nids d'abeilles (7) du corps support de catalyseur (1).

9. Dispositif selon l'une des revendications 1 à 7, **caractérisé en ce que** le corps en nids d'abeilles (2) a des nids d'abeilles (8) qui ont la même taille que celles du corps support de catalyseur (1).

10. Dispositif selon l'une des revendications précédentes, **caractérisé en ce qu'**un autre corps en nids d'abeilles (9), notamment un filtre à particules, est présent en aval du corps en nids d'abeilles (2) dans le sens de l'écoulement du gaz d'échappement.
